Europäisches Patentamt

European Patent Office

Office européen des brevets

(19)

(11) Veröffentlichungsnummer: **0 180 845**
**B1**

# (12) EUROPÄISCHE PATENTSCHRIFT

(45) Veröffentlichungstag der Patentschrift: **16.05.90**

(21) Anmeldenummer: **85113369.4**

(22) Anmeldetag: **22.10.85**

(51) Int. Cl.⁵: **G 07 B 13/08**

(54) **Anordnung für die Einschaltung von Tarifstufen.**

(30) Priorität: **08.11.84 DE 3440798**

(43) Veröffentlichungstag der Anmeldung:
**14.05.86 Patentblatt 86/20**

(45) Bekanntmachung des Hinweises auf die
Patenterteilung:
**16.05.90 Patentblatt 90/20**

(84) Benannte Vertragsstaaten:
**AT DE FR GB IT SE**

(56) Entgegenhaltungen:
**EP-A-0 079 401**
**DE-A-3 204 081**
**DE-A-3 213 796**

(73) Patentinhaber: **Mannesmann Kienzle GmbH**
**Heinrich-Hertz-Strasse**
**D-7730 Villingen-Schwenningen (DE)**

(72) Erfinder: **Adams, Jürgen**
**Am Mühlweiher 1**
**D-7730 Villingen-Schwenningen (DE)**

Courier Press, Leamington Spa, England.

## Beschreibung

'Die Erfindung bezieht sich auf eine Anordnung für die Eünschaltung von Tarifstufen mit unabhängigen Parametern, insbesondere in Form von unterschiedlichen Grundbeträgen, mittels der Bedienastasten eines elektronischen Taxameters, wobei über eine serial bedienbare Taste T1, T2, eine sequentielle Anwahl einer gewünschten Tarifstufe initiierbar ist und die betreffende Tarifstufenwahl direkt in Form eines Zuordnungsmerkmals in einer Anzeige identifizierbar angezeigt wird (EP-A-0 079 401).

Ein Taxametergerät dient bekanntlich der Errechnung von Fahrpreisen aus den Leistungen, die vom Taxifahrzeug aufgrund eines Fahrauftrages erbracht werden. Um einen weitgehend leistungsgerechten Fahrpreis zu ermitteln, ist es erforderlich, eine möglichst alle vorkommenden Umstände berücksichtigende Tarifstruktur zu konzipieren, die auf der Anwendung stark unterteilbarer Parameter beruht. So sind insbesondere bei einem elektronischen Taxameter die Voraussetzungen gegeben, aus den als Wegstrecken- und Zeitabschnitten in eine Fahrpreisberechnung eingehenden Elementen eine fast unbegrenzte Diversifikation in die Fahrpreisberechnungsprozedur einzubringen. Dennoch blieben aus dem Zeitalter der mechanischen Taxameter gewisse Grundzüge in Gestaltung des Tarifgefüges erhalten. Entsprechend wurde auch bei der Einführung der meisten elektronischen Taxameter die Anwendung von vier unterschiedlichen Tarif- oder Taxstufen übernommen und durch die technologisch bedingten Ausbaufähigkelten ergänzt. Während es bei den mechanischen Geräten zumeist dabei blieb, die vier Tarifstufen über eine mechanische Schaltwelle schrittweise oder über getrennte Bedientasten jeden Tarif ein zeln anzuwählen unter Einschaltung von Sperrmaßnahmen gegen manipulation über das Bedienteil, ist es bei den technologisch mit Mikroprozessortechnik ausgestalteten Geräten möglich, bei unvergleichbar geringerem Aufwand die Tarifanwahl mit Zuordnung einmal gewählten Paramtern zu gestalten. Entsprechend hat sich bei Taxametern mit mehreren Tarifstufen eine sequentielle Anwahl der Tarifstufen in bezug auf die Aufwendung von Bedienelementen als vorteilhaft erwiesen. Für die Bedienung im normalen Taxbetrieb sind im wesentlichen zwei Tarifwahltasten T1 und T2 vorgesehen, über die in Abhängigkeit einer in einem internen Speicher (ROM) hinterlegten Programmsequenz zur Steuerung der Taxameterfunktionen die verfügbaren Tarifstufen anwählbar sind. Dabei ist bei einer Standardprogrammierung des Taxameters der Tarifwahltaste T1 beispielsweise eine Schaltfolge zugeteilt, über welche in einer Art Vorwärtsschaltung das Gerät aus dem Zustand "FREI" in einer Sequenz über die Tarifstufen I bis IV nach "KASSE" und "FREI" schaltbar ist. Die zweite Tarifwahltaste T2 ermöglicht in einer Standardprogrammierung im BESETZT-Zustand eine Rückschaltung innerhalb der Tarifstufen IV bis I. Bekanntlich gelangt unmittelbar mit der Einschaltung des Taxameters in übereinkunft mit der Tarifstruktur ein einmal festgelegter, so bezeichneter "Grundbetrag" zur Anzeige. Solange es in den einzelnen Tarifstufen keine großen Parameterunterschiede gab, d.h. solange insbesondere gleiche Grundbeträge in der Anzeige auftraten, war die Anwahl einer Tarifstufe unproblematisch im Hinblick auf die "Zahlenspiele" auf der Fahrpreisanzeige. Mit zunehmender Verbreitung von größeren Parameter-Unterschieden, wie verschiedene Grundbeträge in den einzelnen Taxstufen, Unterschiede in den Anfangsstrecken zu Fortschaltstreckenverhältnissen sowie Unterschiede in den der Taxstufe zugeordneten Kontrollfunktionen, kann es zu Mißdeutungen des Fahrpreises und zu Funktionsüberschneidungen bei der Tarifstufenanwahl kommen. Wird z. B. der Taxameter aus Position "FREI" in die Taxstufe "III" gebracht, wobei in den Taxstufen I, II und III unterschiedliche Grundbeträge vorgegeben sind, erscheint bei jedem Anwahlschritt auf der Fahrpreisanzeige ein anderer, oft in großen Schritten wachsender Betrag. Dieses Anzeigeverhalten kann seitens des Fahrgastes zu Mißdeutungen führen, obwohl das Gerät ordnungsgemäß bedient wurde.

In einer vergleichbaren Weise verhält sich das Gerät bei der Anwendung der übrigen Parameter. Die Verrechnung beispielsweise von Automatik-Zählern, wie sie zur automatischen Tarifumschaltung nach "n" Fortschaltungen eingesetzt werden, kann fehlerhaft verlaufen, wenn in den bei der Anwahl zu überspringenden Taxstufen, beispielsweise bei einem Wechsel von Taxstufe I nach Taxstufe IV durch eine Betätigung der Bedientaste, für die Automatikzähler inkompatible Werte für die gewünschte Funktion vorgegeben sind.

Aus der DE-A-32 13 796 ist es bekannt, eine Bediensperrzeit für eine Taste vorzusehen. Eine Wartezeit für die Anzeige eines sequentiell angewählten Fahrpreisbetrages ist jedoch nicht angeregt.

Aufgabe der Erfindung ist es, eine Schaltungsanordnung zum Betrieb der Tarifstufen-Anwahl zu finden, durch welche jederzeit in der Anzeige die angewählte Tarifstufe identifizierbar ist, Unklarheiten in der Preisanzeige während eines Tarifstufen-Anwahlvorganges und Funktionsüberschneidungen hinsichtlich der Tarifparameter in den einzelnen Tarifstufen während der Tarifstufenanwahl vermieden bleiben.

Die Lösung dieser Aufgabe ist dadurch gekennzeichnet, daß mit der Wahl einer Tarifstufe die Laufzeit einer vorgebbaren Wartezeit auslösbar ist und daß nach Ablauf der Wartezeit ein der gewählten Tarifstufe zugeordneter Parameter in Form eines Betrages im Fahrpreisanzeigefeld erscheint zur Definition einer Akzeptanz der gewählten Tarifstufe und daß hiermit alle übrigen, der gewählten Tarifstufe zugeordneten Parameter wirksam werden.

Der Vorteil der Erfindung ist offensichtlich an der Funktion der Anzeige erkennbar. Wird zur Anwahl einer bestimmten Tarifstufe, also zum Einschalten des Taxameters, zum Vorwärtsschalten oder Rückwärtsschalten in eine der beispielsweise vier verfügbaren Tarifstufen eine Taste T1 oder T2 ein-oder mehrmals betätigt, so erscheint in der Anzeige unmittelbar das Zuordnungsmerkmal der der zuletzt vollzogenen Tastenbetätigung zugeordneten Tarifstufe. Will man beispielsweise aus der Funktionsposition "FREI" in die Tarifstufe III schalten, so ist beispielsweise die Taste T1 sequentiell dreimal zu betätigen, wenn nicht durch ein besonderes Funktionsprogramm eine andere Folge der Tarifstufenwahl vorgegeben ist. Unmittelbar nach Erkennen der Tastenbetätigung erfolgt die Anzeige der damit angewählten Tarifstufe; dies kann beispielsweise geschehen, indem in gleicher Folge die Ziffern "1", "2", "3" als Symbole für die schaltungstechnische Annahme der Tastenbetätigungen im Anzeigefeld für die Tarifwahl erscheinen. Bei jeder Betätigung einer Tarifanwahl innerhalb einer vorgegebenen Wartezeit erfolgt außerdem ein Neubeginn der Laufzeit der Wartezeitphase. Geht man davon aus, daß eine Durchwahl über zwei oder drei Tarifstufen hinweg erfolgt, so reicht es aufgrund des jeweiligen Neubeginns der Laufzeit aus, eine Wartezeit etwa im Bereich einer Sekunde vorzugeben. Erst nach Ablauf der Wartezeit, die auf die zuletzt erkannte Tarifwahl folgt, erscheint der dieser Tarifstufe zugeordnete Grundbetrag und gleichzeitig werden die dieser Tarifstufe zugeordneten Parameter gültig bzw. wirksam. Durch diese Anordnung ist es möglich, eine Tarifstufe durch "überspringen" von nicht gewünschten Tarifstufen anzuwählen, ohne daß die Fahrpreisanzeige während des Wahlvorganges verändert wird. Es findet also innerhalb der Wartezeitphasen keinerlei Veränderung bezüglich der Anzeige von Parametern im Fahrpreisanzeigefeld statt, und dieses Anzeigeverhalten, insbesondere bei einer sequentiellen Durchschaltung auf eine höhere Tarifstufe, vermeidet beim Fahrgast jeden Gedanken an eine evtl. durch Tastenbetätigung manipulierfähige Einstellung eines erhöhten Grundbetrages. Darüber hinaus ist in einem Systemspeicher (ROM) innerhalb eines Funktionsprogramms der einzelnen Schritte eine Information hinterlegt, nach welcher bei einem Taxameter mit beispielsweise vier wählbaren Tarifstufen eine Begrenzung der Wahlzyklen einstellbar ist. Es kann dann innerhalb der zeitlichen Verzögerung einer Anzeige eines Grundbetrages nur viermal eine Tarifstufenanwahl vorgenommen werden, wonach zwangsweise der Tarifwahlvorgang abgebrochen wird und der Grundbetrag der zuletzt angewählten Tarifstufe zur Anzeige gelangt. Eine derartige Begrenzung der Wahlzyklen hat den Vorteil, daß der Versuch einer manipulativen Beeinflussung des Tarifwahlvorganges nach dem Durchlauf der Anzahl der wählbaren Tarifstufen zwangsläufig abgebrochen wird.

Nachfolgend ist anhand der Zeichnungen ein Ausführungsbeispiel der erfindungsgemäßen Schaltungsanordnung beschrieben. Es zeigt

FIG. 1 ein Blockschaltbild eines Taxameters mit den im wesentlichen für die Realisierung der Erfindung in Zusammenhang stehenden Einzelheiten in schematisierter Darstellung,

FIG. 2 ein Flußdiagramm des mit der Schaltungsanordnung durchführbaren Funktionsablaufes,

FIG. 3 eine Frontansicht des Taxameters mit der Anzeige, mit den Bedienelementen und den bei einer Tarifwahl in der Anzeige erscheinenden Zuordnungsmerkmalen einschl. des zeitverzögert einblendbaren Grundbetrages.

Ein Taxameter der vorbezeichneten Art dient bekanntlich der Errechnung eines Fahrpreises aus den Leistungen eines Fahrauftrages durch ein Taxifahrzeug. Basis für die Berechnung eines Fahrpreises sind Weg- und/oder Zeitelemente, die sich von Beginn bis zur Beendigung des Fahrauftrages ergeben und mit einem Faktor multipliziert den in einer Anzeige dargestellten und zu bezahlenden Fahrpreis ergeben. Um in Abhängigkeit von Ort und Zeit eine leistungsgerechte Ermittlung des Entgeltes zu gewährleisten, sind entsprechend mehrere wählbare Tarife in einem Taxameter vorgesehen, wobei jedem Tarif sog. Parameter zuordenbar sind, die anhand der örtlichen Bedingungen festgelegt werden. Selbstverständlich müssen auch die Parameter veränderbar sein, um nach einer gewissen Zeit der Gültigkeit durch beispielsweise eine verbesserte Basis der Parameter die Einnahmen an eine veränderte Verdienstoder Kostensituation anzupassen.

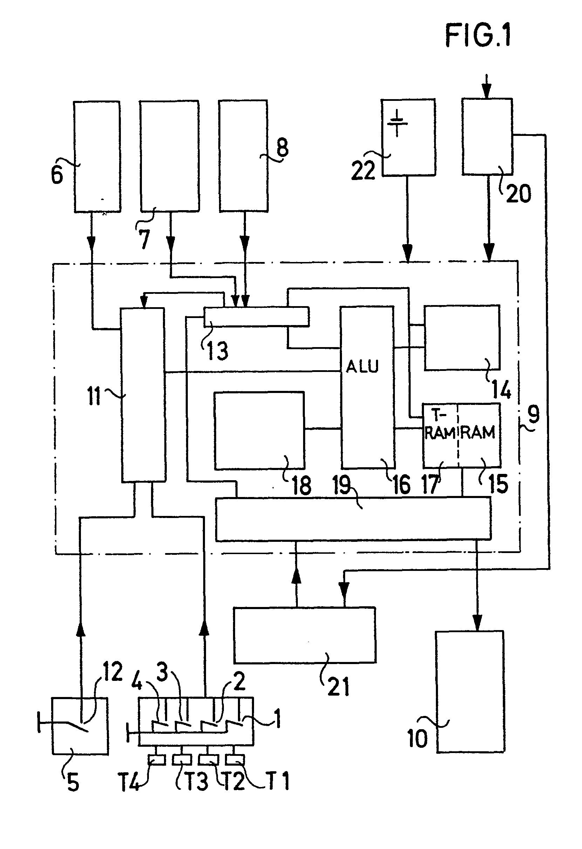

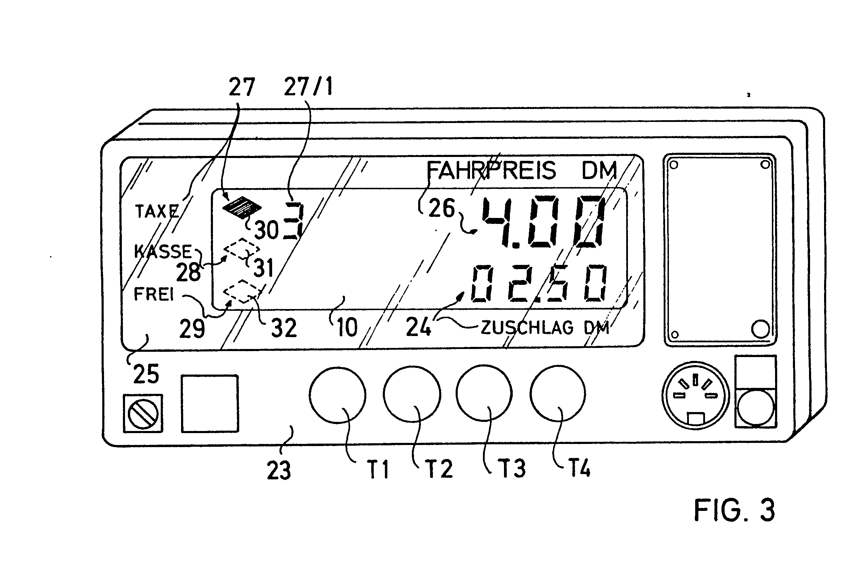

In Anpassung an diese vielschichtigen Erfordernisse und an den Wandel der verfügbaren Technologien hat sich das ehemals mechanische Taxametergerät zu einem spezifizierten Mikrocomputer eigener Prägung, insbesondere zur Fahrpreisdatenermittlung im Kraftfahrzeug, entwickelt. Entsprechend besteht ein Taxameter der erklärten Art, wie aus dem Blockschaltbild gemäß FIG. 1 erkennbar ist, aus Schalter-Elementen 1 bis 5 für die manuell auslösbaren Ein- und Umschaltfunktionen, aus den leistungsbezogenen Signaleingabeelementen 6, 7, 8 für Weg- und Zeigsignale, aus einer Zentraleinheit CPU 9 zur Ermittlung und Speicherung der Taxdaten und schließlich aus einer Datenausgabe 10, die im wesentlichen aus einer Fahrpreisanzeige 10 besteht mit möglicherweise Schnittstellen für den Anschluß von Peripheriegeräten. Wie in FIG. 1 und 3 erkennbar ist, sind die manuell auslösbaren Funktionen als Tasten T1, T2, T3, T4 ausgebildet, welche entsprechend auf Schalter 1, 2, 3, 4 wirken und bei einer Betätigung derselben jeweils ein Signal in eine Port-Logik 11 als Teil der CPU 9 einbringen, wobei die Port-Logik 11 als eine Art Zwischenspeicher zu betrachten ist. Gleichfalls mit der Port-Logik 11 verbunden ist ein manuell bedienbarer Umschalter 12, der in der Grundstellung das Gerät in den Zustand des Taxbetriebes versetzt, bei einer Umstellung in die zweite Position das Gerät in einen Zustand für die Aufnahme von Service-Programmen, wie Weganpassung oder Tarifprogrammierung und dergl., versetzt. Als dienstleistungsbezogene Signaleingabeelemente sind ein Weggeber 6 und ein Zeitgeber 7 vorgesehen, wobei der Weggeber 6 ebenfalls mit der Port-Logik 11 in Verbindung steht und wegstreckenrepräsentative Signale liefert. Der Zeitgeber 7, beispielsweise als Quarzoszillator ausgelegt, bestimmt Steuerzeiten des Systems, wie Display-Multiplex-Signale, Ablaufzeiten der Bedienvorgänge usw., und nicht zuletzt werden die Tarifzeiten vom Zeitgeber 7 abgeleitet. Der Zeitgeber 7 ist mit einem Steuerwerk 13, das als Teil der CPU 9 ausgewiesen ist, verbunden. Ein weiterer Zeitgeber 8, beispielsweise als RC-Oszillator ausgebildet, dient zur Bestimmung der Taktrate des Mikroprozessors und ist gleichfalls mit dem Steuerwerk 13 verbunden. Das Steuerwerk 13 als integrierter Bestandteil der CPU 9 steht über interne Leitungsverbindungen sowohl mit der Port-Logik 11 als auch über weitere Datenleitungen mit einem ROM 14 (Read-Only-Memory) und einem RAM 15 (Random-Access-Memory) sowie mit einem Rechenwerk oder ALU 16 (Arithmetic Logic Unit) der CPU 9 in Verbindung. Das ROM 14 erfüllt die Funktion eines Systemspeichers, d.h. aufgrund einer bestimmten Tastenbetätigung und ausgehend von einer bestimmten Funktionsposition bestimmt das im ROM 14 abgelegte Systemprogramm die der Tastenbetätigung zugeordneten Funktionsschritte. Um schließlich ein auf die speziellen Anforderungen des Anwenders einstellbare Arbeitsweise zu verwirklichen, ist neben dem Systemspeicher ROM 14 ein programmierbarer Speicherteil im RAM oder T-RAM 17 vorgesehen, in welchem in erster Linie die den unterschiedlichen Tarifen zuordenbare Parameter hinterlegt sind, wo aber auch bestimmte, den Funktionsablauf beeinflussende Informationen abgelegt sein können. Das bedeutet, daß aufgrund einer Tasteninformation eine im T-RAM 17 zusammen mit den dazugehörigen Tarifdaten abgelegte Funktionsposition zugeordnet bzw. wirksam werden kann. Das RAM 15 ist notwendiger Bestandteil einer CPU 9 und steht

Wie weiter aus FIG. 1 zu entnehmen ist, erhält ein Display-Treiber 19 die zur Anzeige bestimmten Daten aus dem RAM 15 und beaufschlagt im Multiplexverfahren die Anzeigeelemente der Fahrpreisanzeige 10. Weitere Anweisungen erhält der Display-Treiber 19 über eine Verbindung zum Steuerwerk 13. Die Fahrpreisanzeige 10 bzw. das numerische Display ist als mehrstellige Dezimalanzeige ausgebildet, wobei die einzelnen Ziffern durch entsprechende Ansteuerung einer 7-Segment-Anordnung darstellbar sind.

Schließlich ist für die Spannungsversorgung ein für den Betrieb im Kfz geeigneter Netzteilbaustein 20 erforderlich, der die Systemspannung für die CPU 9 und über einen weiteren Baustein 21 die Display-Spannungen liefert. Zur Datenpufferung bei Ausfall oder abgeschalteter Betriebsspannung ist eine Pufferbatterie 22, beispeilsweise eine Lithium-Zelle, vorgesehen.

Die FIG. 3 zeigt perspektivisch das Taxametergerät mit im wesentlichen einer Frontansicht inklusive der Fahrpreisanzeige 10. Im unteren Teil eines vorderen Gehäuses 23 sind Tasten T1, T2, T3, T4, vorgesehen, die der Auslösung der unterschiedlichen Funktionen für den Taxbetrieb sowie der Abwicklung gewisser Service-Programme dienen. Bei dem gemäß der Beschreibung dargestellten Gerät handelt es sich um einen Taxameter der gängigen Ausbildungsformen mit vier verfügbaren unterschiedlichen Tarifstufen, wobei in gewissem Rahmen und aufgrund der flexiblen Technologie der Umfang der anwendbaren Tarife auf n-Tarifstufen erweitert oder beschränkt werden kann. Die Tasten T1, T2 sind als einfache, serial bedienbare Tasten ausgebildet und bei dem Ausführungsbeispiel dazu auserwählt, eine sequentielle Anwahl einer gewünschten Tarifstufe auszulösen. Grundsätzlich sind aufgrund eines im ROM 14 hinterlegten Systemprogramms mit jeder Taste T1 bis T4 eine ganze Reihe unterschiedlicher Funktionen auslösbar. In einer Standardprogrammierung kommt der Taste T1 die Einschalt- und Tarifwahlfunktion zu, d.h. mit T1 ist das Gerät von FREI nach BESETZT und in der Sequenz nach Tarifstufe I bis IV, KASSE, zurück in FREI-Position schaltbar. Die zweite Tarifwahltaste T2 ermöglicht im Standardprogramm für den Taxbetrieb und im Besetztzustand eine Rückschaltung innerhalb der Tarifstufen von IV nach I. Auch der Taste T2 sind eine Reihe weiterer Funktionen gemäß der Programmgestaltung zuordenbar. Der Vollständigkeit halber sei darauf verwiesen, daß im Taxbetrieb der Taste T3 beispielsweise die Summierfunktion von Fahrpreis und Zuschlagbeträgen zugeteilt werden kann und mit der Taste T4 über seriale Betätigung eine Eingabe und Aufsummierung von Zuschlagbeträgen sowie deren Anzeige in einem besonderen Anzeigefeld 24 für Zuschlag in der Fahrpreisanzeige 10 durchführbar ist. Zur Identifizierung von in der Anzeige 10 erscheinenden numerischen Angaben ist ein Schriftblatt 25 eingelegt, das mit verbalen Angaben 24, 26, 27, 28, 29 die Bedeutung der im zugeordneten Anzeigefeld 24, 26 bis 29 erscheinenden Ziffern und Zeichen angibt. Es bedeuten die Pos. 24 das Feld für einen Zuschlagbetrag, die pos. 26 das Feld für die Angabe des Fahrpreises in DM, das Feld 27 bezeichnet die gewählte Tarifstufe mit Zuordnungsmerkmal. das Feld 28 die Funktionsposition KASSE, das Feld 29 die Funktionsposition FREI. Die Fahrpreisanzeige 10 ist als LC-Display ausgeführt, und es sind kundenspezifisch festgelegt z. B. sechs Dezimalstellen für den Fahrpreis, vier Dezimalstellen für den Zuschlag und eine Dezimalstelle für die Tarifstufenanzeige integriert. Als Zuordnungsmerkmal für die Tarifstufenbezeichnung ist zusätzlich zur numerischen Bezeichnung noch ein Flag 30 im Feld 27 integriert, das in gleicher Weise wie die Flags 31 und 32 im Feld 28 für KASSE und im Feld 29 für FREI als Zeiger ausgebildet ist. Gemäß der Darstellung nach FIG. 3 ist das Taxametergerät durch serielle Bedienung der Taste T1 in die Tarifstufe III eingestellt, was sich unmittelbar bei der Erkennung der zuletzt erfolgten Tastenbetätigung anzeigt. Außerdem ist nach Ablauf der Wartezeit bereits der als Grundbetrag dem Tarif III zugeordnete parameter (4,00 DM) im Anzeigefeld 26 aktiviert, was die Akzeptanz der zuletzt angewählten Tarifstufe III durch das

System signalisiert. Zusätzlich wurde durch Betätigung der Taste T4 ein Zuschlagbetrag von z. B. 2,50 DM eingegeben, der im Feld 24 zur Anzeige gelangt.

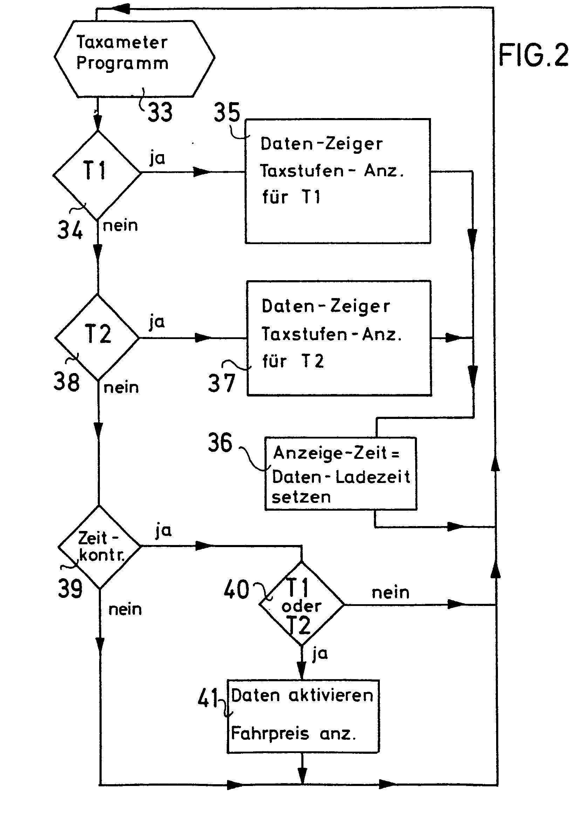

Ein Funktionsablauf einer Tarifstufenwahl mit der erklärten Schaltungsanordnung ist in Form eines Flußdiagrammes gemäß FIG. 2 schematisch dargestellt und erfolgt nach einem Unterprogramm im Taxameterprogramm 33, welches im Systemspeicher ROM 14 hinterlegt ist. Es wird davon ausgegangen, daß der Taxameter über die Taste T1 (oder T2) zum Zwecke der Anwahl einer Tarifstufe einen Schalter 1 schließt und das Gerät eingeschaltet wird (in Verzweigung 34). Die Port-Logik 11 gibt die Tasteninformation an die ALU 16. Das Programm aus ROM 14 läuft unter Einbeziehung des Steuerwerkes 13, der ALU 16, des RAM 15 und des Pointer-Registers 18 und erkennt, daß eine Taste 1 oder 2 betätigt wurde, und setzt einen Tasten-Merker im RAM 15 für eine spätere Prüfung nach Ablauf der Wartezeit. Es erfolgt eine Programmverzweigung gemäß Chart- bzw. Flußdiagramm (FIG. 2) bei 34 nach 35. Nach Chart-Pos. 35 wird ein Datenzeiger im Pointer-Register 18 erhöht, entsprechend erhöht sich die Zuordnungszahl 27/1 der Tarifstufenanzeige und wird als entsprechendes Zuordnungsmerkmal 27 in der Anzeige 10 wirksam. Es erscheint das Flag 30 und die Zuordnungszahl 27/1 im Feld. Darauf folgt gemäß Chart-pos. 36 das Setzen einer bestimmten Wartezeit und Daten-Ladezeit im RAM 15. Von dort erfolgt ein Rücksprung in die Betriebsschleife nach 33 in das Taxameter--programm.

Für den nun folgenden Vorgang sei angenommen, daß die Taste T1 oder T2 wiederholt betätigt wurde vor Ablauf der Wartezeit und hiermit bevor eine Akzeptanz des Tarifes durch einen Parameter im Feld 26 angezeigt ist. Der Programmablauf wiederholt sich mit entsprechender Erhöhung gemäß Verzweigung 35 (bei Betätigung von T1) oder Erniedrigung gemäß Verzweigung 37 (bei Betätigung von T2) des Datenzeigers im Pointer-Register 18. Jedoch die Wartezeit und Datenladezeit im RAM 15 wird neu gesetzt und beginnt folglich von neuem zu laufen. Es schließt sich hieran wieder der Rücksprung ins Taxameterprogramm 33 an.

Schließlich folgt ein dritter möglicher Vorgang im Durchlauf der Betriebsschleife, wenn sich beide Tasten T1, T2 in Ruhe befinden, also weder die Taste T1 noch die Taste T2 erneut betätigt wurden. Die Port-Logik 11 gibt den aktuellen Tastenzustand an die ALU 16. Das Programm erkennt, daß keine der Tasten T1 und T2 mehr bedient wurde und steuert in eine Verzweigung 39 für die Zeitkontrolle. Die Laufzeit wird erzeugt mit dem Zeitgeber 7 (FIG. 1) und ist über interne Verbindung über das Steuerwerk 13, die ALU 16 zum RAM 15 mit einem Zeit-register bzw. Zeitzähler verbunden. Das programm prüft im RAM 15 das Zeitregister, ob in einem vorausgegangenen Durchlauf der Betriebsschleife gemäß Chart-Pos. 36 eine Zeit gesetzt wurde. Ist aufgrund der Zeitkontrolle eine gesetzte Zeit nicht abgelaufen, so erfolgt nach Verzweigung 39 ein Rücksprung in das Taxameterprogramm Chart-pos. 33.

Ist eine gesetzte Zeit abgelaufen, so verzweigt das Programm, wie dies im Flußdiagramm nach FIG. 2 angezeigt ist, in die Tasten-Merker-Kontrolle 40 und prüft, ob zu Beginn einer vorangegangenen Betriebsschleife aufgrund der erkannten Betätigung einer Taste T1 oder T2 ein Tasten-Merker im RAM 15 gesetzt wurde. War ein Tasten-Merker gesetzt, so wird dieser zurückgesetzt bzw. quittiert und laut Chart-Pos. 41 eine mit der betreffenden Taste initiierbare Datenverarbeitung eingeleitet, d.h. es erfolgt eine Bearbeitung hinsichtlich der zuordenbaren Parameter im Zusammenwirken mit im RAM 15 bzw. 17 und in dem Pointer-Register 18 bereitgestellten Informationen und Adressen. In der Folge erscheint die Darstellung von Fahrpreisparametern, im vorliegenden Beispiel der Grundbetrag, aus dem RAM über den Display-Treiber 19 im Feld 26 der Anzeige (LC-Display) 10. Die Anzeige eines Paramters signalisiert die Annahme der gewählten Tarifstufe und den Beginn einer Fahrpreisberechnung nach den Anweisungen des Taxameterprogrammes.

Schließlich bleibt noch zu erläutern, daß wenn ein Tasten-Merker nicht gesetzt war, aus der Verzweigung 40 für die Tasten-Merker-Kontrolle wiederum ein Rücksprung in das Taxa- meterprogramm erfolgt. Dies kann dann der Fall sein, wenn beispielsweise die Zeit schon länger abgelaufen ist bzw. der Tasten-Merker zwischenzeitlich bereits gelöscht wurde.

**Patentansprüche**

1. Anordnung für die Einschaltung von Tarifstufenmit ("m") unabhängigen Parametern, insbesondere in Form von unterschiedlichen Grundbeträgen, mittels der Bedientasten (T1, T2) eines elektronischen Taxameters, wobei über eine serial bedienbare Taste (T1, T2) eine sequentielle Anwahl einer gewünschten Tarifstufe ("n") initiierbar ist und die betreffende Tarifstufenwahl direkt in Form eines Zuordnungsmerkmals (27) in einer Anzeige (10) identifizierbar angezeigt wird, dadurch gekennzeichnet, daß mit der Anwahl einer Tarifstufe die Laufzeit einer vorgebbaren Wartezeit auslösbar ist und daß nach Ablauf der Wartezeit ein der gewählten Tarifstufe ("n") zugeordneter Parameter in Form eines Betrages im Fahrpreisanzeigefeld (26) erscheint zur Definition einer Akzeptanz der gewählten Tarifstufe ("n") und daß hiermit alle übrigen, der gewählten Tarifstufe zugeordneten Parameter wirksam werden.

2. Anordnung nach Anspruch 1, dadurch gekennzeichnet, daß als Zuordnungsmerkmal (27) einer angewählten Tarifstufenanzeige ("n") die Einblendung einer Zuordnungszahl (27/1) entsprechend der Tarifstufenbezeichnung auslösbar ist.

3. Anordnung nach den Ansprüchen 1 und 2, dadurch gekennzeichnet, daß bei einer Betätigung der Taste (T1, T2) für einen weiteren Tarifstufenwechsel vor einer Einblendung eines parameters in dem Fahrpreisanzeigefeld (10) ein Neubeginn der Laufzeit der Wartezeitphase für eine Anzeige des Parameters initialisierbar ist.

4. Anordnung nach den Ansprüchen 1 bis 3, dadurch gekennzeichnet, daß eine Begrenzung der Tarifwahlzyklen einstellbar ist, dergestalt daß bei einem mit "n" wählbaren Tarifstufen ausgestatteten Gerät innerhalb der Laufzeit der Wartezeitphasen nur n-mal eine Tarifstufenwahl initiierbar ist.

5. Anordnung nach Anspruch 4, dadurch gekennzeichnet, daß nach der n-ten Tarifstufenwahl ein Abbruch des Tarifwahlvorganges auslösbar ist und zwangsläufig am Ende der Laufzeit der Wartezeit ein der n-ten Tarifstufenwahl zugeordneter Parameter zur Anzeige gelangt.

6. Anordnung nach Anspruch 1, dadurch gekennzeichnet, daß alle übrigen Tarif-parameter nach Ablauf der Wartezeit gleichzeitig mit dem Erscheinen eines ersten Parameters in der Anzeige (10) wirksam werden.

**Revendications**

1. Dispositif pour la mise en service d'échelons tarifaires "n" avec des paramètres independants, tout particulièrement sous forme de montants de base différents, au moyen des touches de commande (T1, T2) d'un taximètre électronique, dans lequel il est possible d'initier par l'intermédiaire d'une touche à commande sérielle (T1, T2) une sélection séquentielle d'un échelon tarifaire désiré ("n") et où la sélection d'échelons tarifaires correspondante est directement affichée, de façon identifiable, sous forme d'un repère de référence (27) dans un affichage (10), caracté-risépar le fait que, avec la sélection d'un échelon tarifaire, il est possible de déclencher un temps d'attente prédéterminable et que, après l'écoulement du temps d'attente, un paramètre affecté à l'échelon tarifaire sélectionné ("n") apparaît sous forme d'un montant dans le champ d'affichage de prix de course (26) pour la définition d'une acceptation d'un échelon tarifaire sélectionné ("n") et que, de ce fait, tous les autres paramètres affectés à l'échelon tarifaire sélectionné deviennent efficaces.

2. Dispositif selon la revendication 1, caractérisé par le fait que, comme repère de référence (27) d'un affichage d'echelons tarifaires sélectionné ("n"), il est possible de déclencher l'affichage d'un chiffre d'affectation (27/1) conformément à la désignation de l'échelon tarifaire.

3. Dispositif selon l'une quelconque des revendications 1 et 2, caractérisé par le fait que, lors d'un actionnement de la touche (T1, T2) pour un autre changement d'échelon de tarif avant un affichage d'un paramètre dans le champ d'affichage du prix de course (10), il est possible de réinitialiser un recommencement de la phase de temps d'attente pour un affichage du paramètre.

4. Dispositif selon l'une quelconque des revendications 1 à 3, caractérisé par le fait qu'une limitation des cycles de sélection de tarif est réglable, de telle sorte que, dans un appareil équipé de "n" échelons tarifaires sélectionnables, une sélection d'échelons tarifaires ne peut être initiéque n fois en l'espace des phases de temps d'attente.

5. Dispositif selon la revendication 4, caractérisé par le fait que, après la nième sélection d'échelons tarifaires, il est possible d'interrompre le processus de sélection de tarif et que, à la fin du temps d'attente, un paramètre affecté à la nième sélection d'échelons tarifaires est imperativement affiché.

6. Dispositif selon la revendication 1, caractérisé par le fait que tous les autres paramètres tarifaires deviennent efficaces après l'écoulement du temps d'attente simultanément avec l'apparition d'un premier paramètre dans l'affichage (10).

**Claims**

1. Arrangement for the introduction of tariff stages ("n") with independent parameters, in particular in the form of different basic amounts, by means of the operating buttons (T1, T2) of an electronic taximeter, a sequential preselection of a desired tariff stage ("n") being able to be initiated by way of a serially operable button (T1, T2) and the respective tariff stage selection being displayed in an identifiable manner in a display (10) directly in the form of a co-ordination feature (27), characterised in that the running time of a waiting time which can be predetermined can be initiated by the preselection of a tariff stage and that after the expiration of the waiting time, a parameter associated with the selected tariff stage ("n") in the form of an amount appears in the fare display panel (26) for the definition of an acceptance of the selected tariff stage ("n") and that all the remaining parameters associated with the selected tariff stage become effective herewith.

2. Arrangement according to Claim 1, characterised in that as the co-ordination feature (27) of a preselected tariff stage display ("n"), the fading-in of a co-ordination number (27/1) corresponding to the tariff stage designation can be initiated.

3. Arrangement according to Claims 1 and 2, characterised in that at the time of actuation of the button (T1, T2) for a further tariff stage change before fading-in of a parameter in the fare display panel (10), a new beginning of the running time of the waiting time phase for a display of the parameter can be initiallised.

4. Arrangement according to Claims 1 to 3, characterised in that a limitation of the tariff selection cycles can be adjusted such that in an appliance equipped with "n" selectable tariff stages, a tariff stage selection can be initiated only n-times within the running time of the waiting time phases.

5. Arrangement according to Claim 4, characterised in that after the $n^{th}$ tariff stage selection, a discontinuation of the tariff selection operation can be initiated and a parameter associated with

the n<sup>th</sup> tariff stage selection is displayed positively at the end of the running time of the waiting time.

6. Arrangement according to Claim 1, characterised in that after the expiration of the waiting time, all the remaining tariff parameters become effective at the same time as the appearance of a first parameter in the display (10).

FIG.1

- 2 / 3 -

FIG.2

Taxameter Programm — 33

T1 — 34

ja → Daten-Zeiger Taxstufen-Anz. für T1 — 35

nein

T2 — 38

ja → Daten-Zeiger Taxstufen-Anz. für T2 — 37

nein

36 — Anzeige-Zeit = Daten-Ladezeit setzen

Zeit-kontr. — 39

ja → T1 oder T2 — 40 — nein

nein

ja

41 — Daten aktivieren Fahrpreis anz.

FIG. 3